Europäisches Patentamt

(19) European Patent Office

Office européen des brevets

(11) Publication number: **0 097 496**
**B1**

(12) **EUROPEAN PATENT SPECIFICATION**

(45) Date of publication of patent specification: **06.05.87**

(21) Application number: **83303499.4**

(22) Date of filing: **16.06.83**

(51) Int. Cl.⁴: **B 32 B 27/12,** A 41 D 27/02, A 41 D 27/06, A 41 D 31/02

(54) Method of reinforcing textile top fabrics and products made thereby.

(30) Priority: **18.06.82 US 389715**

(43) Date of publication of application:
**04.01.84 Bulletin 84/01**

(45) Publication of the grant of the patent:
**06.05.87 Bulletin 87/19**

(84) Designated Contracting States:
**DE FR IT**

(56) References cited:
**AT-B- 339 228**
**DE-A-2 351 405**
**DE-A-2 552 878**
**DE-A-2 741 793**
**GB-A-1 088 555**
**GB-A-1 427 281**

**BEKLEIDUNG UND WÄSCHE, 20. Jahrgang, Heft 3, February 1968, Mönchengladbach, K.H. STUKENBROCK "Herstellung und Eigenschaften von Fixier-Einlagen", pages 142-153**

(73) Proprietor: **Smith and Nephew Plastics Limited**
**P.O. Box 202 English Street**
**Hull HU3 2BL (GB)**

(72) Inventor: **Rand, Edward R.**
**5 rue Lincoln**
**F-75008 Paris (FR)**

(74) Representative: **Cole, William Gwyn**
**Corporate Patents Department Smith and Nephew Research Limited Gilston Park Harlow Essex CM20 2RQ (GB)**

## Description

The invention relates to a method of reinforcing a textile top fabric and reinforced top fabrics made thereby. A top fabric is the outer fabric layer of garments such as coats, shirts, dresses, blouses or parts thereof; curtain material, drapery headers, ties, upholstery and the like made of natural or synthetic fibres.

Save for certain so-called unconstructed garments, practically all apparel needs to have some areas or parts of the garment reinforced, in order to stiffen, support, stabilise or provide body to a textile top fabric. For example, shirt collars and cuffs require bodying linings. A jacket chest needs additional reinforcement so that it may be shaped. A waistband may need the first support of a lining. Coat lapels have to be supported in order for them to hold their shape.

Until about 1940, all such reinforcing of textile materials was done with stiffened interlinings or buckrams, which were sewn into the garment at required stiffening points. This reinforcing was never of the whole garment but always of selected portions thereof. During the 1940s, a labour saving technique came into use whereby these reinforcements of interlining pieces were no longer being sewn into the garments but rather were being used on selected garment surfaces. The conventional interlinings gradually became obsolete and were replaced by fabrics coated with thermoplastic, thermofusible chemicals which were resistant to washing and/or dry cleaning. Thus, a new industry, that of fusible linings and interlinings was created.

The evolution and refinement of this new art is well documented in the literature. Representative of descriptions found in the prior art are the following: Stuckenbrock, Bekleidung und Waesche, Heft 3, pages 142 to 153 (February 8, 1968) Report on Fusing in the Apparel Industry S.6 published by the Apparel Research Foundation Incorporated, Washington, D.C. (1970); Skoka et al., Handbook of Fusible Interlinings (1980); and Chemical Principles of Heat Sealing Adhesives for Fusible Interlinings, Textilveredlung 6, pages 459—468 (1971).

Thermofusible chemicals serves a dual function, first as an adhesive and then as a bodying agent, the weight and volume of the chemicals making it possible to use lighter substrate cloths. The earliest thermofusible coatings were knife or roller coat continuous coatings such as plasticized cellulose acetate or mixtures of novolac and polyvinyl acetate. In the manufacture of shirts, polyvinyl chloride plastisol coatings were first used to be followed by polyethylene extruded films. These continuous coatings in turn were replaced by sintered powders (either polyethylene, polyvinyl acetate or terpolyamide) in order to make the resultant interlinings more air porous and flexible. Where it was desired to have a more regular pattern than provided by the randomly distributed sintered powders, various printing techniques were developed, i.e.; paste printing through rotary screens, usually a regular dot pattern ranging from 9 to 30 mesh screens, the chemicals employed being usually polyvinyl chloride plastisols, aqueous or solvent based dispersions or finely divided (under 80 Mu) polyethylene or polyamide powders. Polyethylene and polyamide powders (200 Mu) as well as polyester powders are now being applied to substrates by a dry "powder point coating" technique. The powders are knife coated into dot depressions which have been engraved onto a metal printing roll. Controlled temperature heating of the roll causes the powders in the engravings to partially coalesce to form powder point agglomerates, which can then be transferred to preheated cloth substrates which are pressed against the printing roller. The process is completed when the substrate passes through a heating tunnel (infra red), which completes the compacting of the fusible dots onto the cloth.

British Patent Specification GB—A—1,088,555 describes a unique method of application of a regular pattern of closely spaced, thermofusible chemical dots of high density polyethylene onto a suitable substrate textile. Non-woven, plastic nets are produced by the bi-axial stressing of a thermoplastic material having a regular pattern of embossments on at least one surface according to the methods of British Patents GB—A—914,489 and GB—A—1,055,963. These nets may be affixed to a cloth substrate by heat and pressure. Depending on the degree of heat and pressure, the net form may be retained or, more normally, the net strands may degenerate, retracting into the bosses and leaving a pattern of discrete closely spaced dots.

All of the foregoing examples of the prior art consist of two elements which comprise the fusible interlining. These two elements consist of the base cloth or substrate, which may be woven, non-woven, knitted, felt or even paper-like. The fibers employed in these base cloths are generally cotton, wool, rayon, synthetic fibers or blends thereof. The second element consists of a fusible chemical coating. In some cases double sided fusibles were used, wherein the substrate fabric was coated on both sides, i.e.; continuously coated, powder sintered, printed, etc. Furthermore, the two elements of these prior art fusible interlinings are formed in separate operations for example by coating the thermofusible element on a preformed substrate element. As a consequence these fusible interlinings are relatively expensive to manufacture and use. This applies in particular to porous fusible interliners the thermofusible elements of which are made by special coating processes. It would therefore be advantageous to have a method of reinforcing textile top fabrics which employs a fusible interlining in which the thermofusible elements and substrate element are formed during the same process.

An alternative method was proposed for eliminating the base cloth element from these fusible interlinings in West German DE—A—25 52 878, 1974. This method comprises printing upon a selected portion of a top fabric requiring stabilization, an aqueous polyacrylic resin compound and a catalyst for its crosslinking. The machinery required is rather elaborate and consists of a printing head, dryer and curing section. This elaborate machinery is required to cure the polyacrylic resin in-situ.

British Patent GB—A—1,427,281 discloses multi-layer nets which have two or more layers of different polymers. British Patent GB—A—1,427,281 discloses that the nets of that patent can be used as an adhesive in bonding together other materials under heat and pressure. When used as an adhesive the nets melt and either break up into globules or become weakened. British Patent GB—A—1,427,281 therefore does not suggest a method of heat bonding the multi-layer nets disclosed therein to a textile top fabric in such a manner as to provide an interlining reinforcement therefore.

The present invention obviates many difficulties of the prior art and economically makes possible reinforced, textile materials, including portions or select areas of garments. The possibility of using multi-layered nets of different polymeric resins where one surface becomes fused as a replacement for conventional, fusible interlinings for clothing and textile applications has not been described in the prior art literature yet responds to the industry needs so cogently described by D. Miles in his article "Fusible Future" British Clothing Manufacturer May 1980. The present invention has many advantages, which will be appreciated by those skilled in the art, reading the following description.

The present invention provides a method of reinforcing a textile top fabric by applying to a surface of the top fabric a heat fusible interlining comprising a thermoplastic polymeric resin net and fusing the net to the surface of the top fabric under heat and pressure characterised in that the heat fusible interlining is a multi-layered composite net comprising a heat sealing layer of polymeric resin and a substrate layer of different polymeric resin which has a melting temperature higher than that of the heat sealing layer said method being carried out at a temperature such that heat sealing layer melts but the substrate layer does not melt.

The method of the invention, in consequence of reinforcing the top fabric, also stabilises the fabric. The net used in the invention can have more than two layers for example a net having an intermediate substrate layer between two outer heat sealing layers. However it is preferred that the net consists essentially of a substrate layer and a heat sealing layer. It is one of the considerable advantages of the method of this invention that such effective reinforcement can occur using such simple materials.

The method of the invention can be used to make reinforced textile top fabrics. Accordingly in another aspect the invention provides a reinforced textile top fabric which has a heat fusible interlining comprising a thermoplastic polymeric resin net heat sealed to the surface of the fabric characterised in that the heat fusible interlining is a multi-layered composite net comprising a heat sealing layer of polymeric resin and a substrate layer of different polymeric resin which has a melting temperature higher than that of the heat sealing layer said net having been heat sealed to the surface of the fabric at a temperature at which the heat sealing layer melts but the substrate layer does not melt.

The composite, multi-layered polymeric net used in the invention may be prepared by any one of a number of known techniques; see for example general methods of preparation described in British Patents GB—A—1,075,487; GB—A—1,427,281 and GB—A—1,427,282. In such methods of preparation the net is formed by stretching a composite multi-layer embossed sheet which has at least two layers of different polymeric resin. The multi-layer embossed sheet can be conveniently made by coextrusion or lamination of the different polymeric resin layers. A suitable method of forming a laminated multi-layer embossed sheet comprises bringing a polymer film in contact with a molten film of a different polymer during the embossing stage for example by feeding the films into the nip of the embossing rollers. In general therefore such nets may be prepared by the lamination or coextrusion of at least two different synthetic, polymeric resin layers in a net form. One layer forms a substrate layer and one the meltable, heat sealing layer for lamination to a textile fabric. Thus, the net employed in the invention will always include at least one heat sealing layer and a substrate layer which, although in theory is heat sealable because it is thermoplastic, has a melting point higher than that of the heat sealing layer so that it does not melt when the net is fused to the surface of the fabric and which therefore in practice behaves as a non-heat sealing layer. The composite multi-layer nets, prepared by the methods described above, have net substrate and heat sealing layers which have been formed in the same process such heat fusible nets therefore will be more economical to prepare and use than comparable prior art fusible interlinings in which the substrate and heat sealing layers are formed separately. Furthermore the nets prepared by such methods will have oriented strands which can provide a degree of resiliency to the reinforced textile fabric.

Suitable thermoplastics which may be used for the construction of a composite net used in the invention include the following synthetic polymers which may be used advantageously as a substrate layer, high density polyethylene, linear low density polyethylene, polypropylene and co-polymers thereof, polyamides including poly-etheramides and polyesteramides, co-polyamide, polyester, co-polyester, polybutylene, polystyrene, polycarbonate and the like and blends thereof. The heat sealing thermoplastic layer may be made of ethylene vinyl acetate co-polymers, saponified ethylene vinyl acetate copolymers, high density polyethylene, low and medium density polyethylene, linear low density polyethylene polypropylene and copolymers thereof, co- and terpolyamides, co-polyester, polyurethane, ethylene ethyl acrylate copolymers and the like and blends thereof. The co-extruded or laminated net materials are preferably so chosen that the substrate layer has a melting temperature of more than about 80°C and the heat sealing layer a melting temperature of less than 150°C. The melting temperature of the substrate layer will be at least 10°C higher desirably at least 20°C and preferably at least 30°C higher than the melting temperature of the heat sealing layer. The heat sealing layer can suitably have a melting temperature of 80°C to 150°C and can preferably have a melting temperature of 110°C to 135°C. The substrate layer can suitably have a melting temperature of 110 deg. C to 250°C and can preferably have a melting temperature of 150°C to 250°C. In order to lower the melting point of the heat sealing layer made out of high density polyethylene, for example, suitable elastomers may be added.

Preferably the substrate layer comprises a polypropylene. Suitable polypropylenes include propylene homopolymers and copolymers of propylene with a minor amount (<10% by weight) of ethylene which have a melting temperature of approx. 160°C to 170°C. Apt polypropylenes of this type are Profax 6524 (density 0.90 melt flow index 4) available from Hercules Inc. and Solvay HW 609 (density 0.90 melt flow index 18) available from Solvay et Cie SA.

Preferably the heat sealing layer comprises polyethylene. Suitable polyethylenes have melting temperatures of 110°C to 140°C. Such polyethylenes include low density polyethylene made by the high pressure process, linear low density polyethylene and high density polyethylene. Preferred polyethylenes are linear low density polyethylenes. An apt high density polyethylene is known as Solvay A3180 (melting point approximately 135°C, density 0.96 melt flow index 18) available from Solvay et Cie SA. Apt linear low density polyethylenes include MW 1210 (melting temperature approximately 125°C, density 0.94 melt flow index 20) and MW 1350 (melting temperature approximately 115°C, density 0.92, melt flow index 20) available C.D.F. Chemie EP.

The use of linear low density polyethylene has been found to be a surprisingly effective heat sealing layer as particularly favourable processing is achieved and a highly favoured product results.

A preferred net for use in the invention has a substrate layer which comprises polypropylene and a heat sealing layer which comprises polyethylene which polyethylene is preferably linear low density polyethylene.

Where adhesion is not sufficient between the substrate layer and the heat sealing layer, an intermediary layer in the form of an adhesive layer may be required for improving adhesion. Suitable materials for the intermediary layer include, for example, ethylene co-polymers which contain one or a plurality of monomers with functional groups and polyolefines having grafted functional groups for example, CXA-resins (DuPont) ionomer resins, for example, Surlyn (DuPont) which is made of ethylene co-polymer with carboxyl group containing monomers, or Admer resins (Mitsui Petrochemicals) which are modified polyolefins. Other suitable materials include ethylene methyl acrylate copolymers, ethylene vinyl acetate co-polymers and co-polyamides and co-polyesters. Such intermediary layers are not generally necessary in this invention and it is one of the considerable advantages of using the previously mentioned preferred polymers that an excellent product can be achieved without recourse to use of an intermediary layer.

Favoured composite multi-layered nets for use in the invention have a regular pattern of intersecting strands and openings which can provide a similar regular pattern of reinforcement of the textile top fabric. Preferred regular nets are nets which have at least one set of parallel strands. Such nets can have two or more sets of parallel strands which intersect to define openings of geometric shape which include shapes such as a square, rectangles, triangles, a rhombus, parallelograms, trapeziums and hexagons. Preferred nets of this type have a first set of parallel strands which intersect at 90° with a second set of parallel strands to define square or rectangular openings. In such nets the first set of parallel strands may extend in the machine direction of the net and the second set of parallel strands may extend in direction which is transverse to the machine direction to form a grid pattern net. Alternatively both sets of parallel strands may extend in directions which are at an angle to the machine direction to form a diamond pattern net. The regular pattern nets described above may have thicker strands or a higher density of strands in one direction than in another direction to provide higher directional reinforcement of the textile top fabric.

The composite multi-layer nets used in the invention which comprise intersecting strands can suitably have 2 to 20 intersections per cm of strand and preferably 3 to 8 intersections per cm of strands in any one direction. In preferred nets of the invention which have a first and second set of parallel intersecting strands it is desirable that these nets have 2 to 20 intersections per cm of strand and preferably 3 to 8 intersections per cm of strand in the direction of both sets of strands.

The weight per unit area of composite multi-layered net used in the method of the invention can suitably be 5 to 50 g/sq.m and can more suitably be 10 to 40 g/sq.m. The weight per unit area of net used to reinforce a top fabric can be different for different types of top fabric. The preferred weight per unit area of net for reinforcing a light weight (150 g/sq.m) shirting material, a medium weight (680 g/sq.m) suiting material and a heavy weight (850 g/sq.m) overcoat material, is 6 to 12 g/sq.m, 12 to 25 g/sq.m, and 22 to 34 g/sq.m respectively.

The weight of the heat sealing layer of the composite multi-layer net used in the invention will be sufficient to enable the net to be heat sealed to the chosen top fabric. The heat sealing layer can suitably be 10% to 50% by weight and can preferably be 25% to 45% by weight of the weight of the net. In nets which have an intermediate adhesive layer between the heat sealing layer and the substrate layer the intermediate adhesive layer can suitably be 1% to 5% by weight of the total weight of the net. The heat sealing layer can have a colour, provided for example by the inclusion of coloured pigment in the polymeric resin, which is different from that of the substrate layer to aid identification of the heat sealing layer prior to heat sealing.

The thickness of the composite multi-layer nets can suitably be 25 micrometres to 500 micrometres and can preferably be 50 micrometres to 250 micrometres.

The process as described here is so versatile in choice of chemical components, configuration of the net, bulk and volume of the composite, as to permit virtually a wide range of textile and reinforcement. The net materials may be handled as conventional interlinings, i.e.; laid up, die cut and shaped as desired. The net material may be fused to the textile material under heat and pressure, using existing plant lamination apparatus and techniques providing that the temperature used does not exceed the melting point of the substrate layer.

The invention will now be illustrated by reference to the following drawings.

Figure 1 is an isometric view of a reinforced top fabric of the invention.

Figure 2 is a cross-sectional, side elevation of the top fabric of the invention seen along lines 2—2 of Figure 1.

Figure 3 is an isometric view of a top fabric of the invention similar to that of Figure 1 reinforced with an alternative composite multi-layer net.

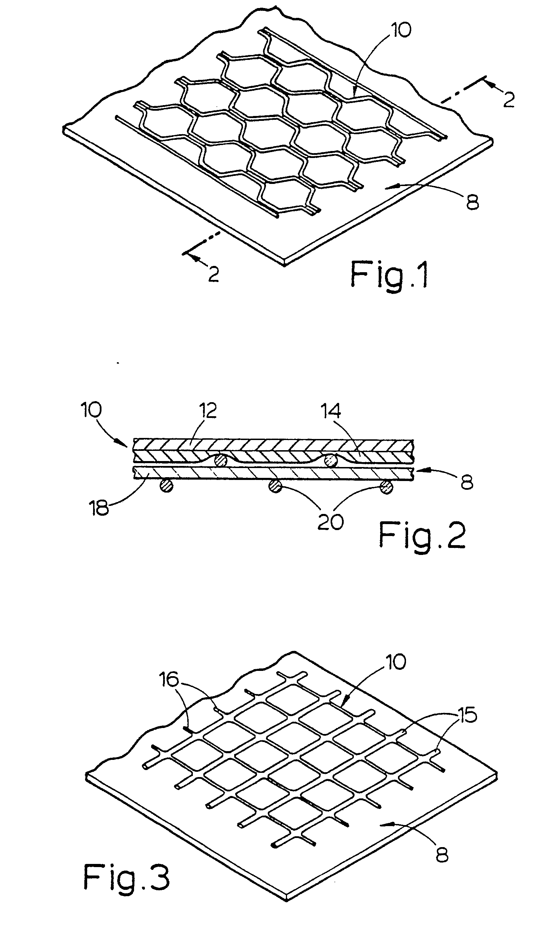

Referring now to the accompanying drawings, one can see in Figure 1 an isometric view of a representative textile top material 8 which has been reinforced with a composite multi-layered net material 10. The net material 10 as shown in Figure 2 comprises a substrate layer 12 as described above and a heat sealing layer 14 as also described above. The woven fabric 8 comprises warp yarns 18 and weft yarns 20 which are bonded to the net 10 through heat sealing layer 14 by known lamination techniques, under heat and pressure. The composite multi-layered net (10) used to reinforce the woven textile top fabric (8) as shown in Figure 3 has a first set of parallel strands (15) which intersect at 90° with a second set of parallel strands (16) to form a square grid pattern net.

It has been found that the method of the invention provides reinforced textile top fabrics which have a better feel and handle than top fabrics reinforced with prior art fusible fabric interlinings which have a woven or knitted substrate layer. It has also been found that the use of composite nets with at least one set of oriented parallel strands can provide the reinforced top fabric with a degree of resiliency which makes the fabric highly suitable for use in waist bands. Furthermore, satisfactory reinforcement of the top fabrics can be obtained with low weights per unit area of composite multi-layered net as described hereinbefore. The invention therefore provides a method of reinforcing textile top fabrics which is relatively simple and more economical than prior art fusible interlining reinforcing methods.

The invention is illustrated by the following examples. In examples 1 to 4 the multi-layer nets of polymeric resin were laminated to a variety of textile top fabrics, employing a Ducker press.

Example 1

A co-extruded bilayer net having a substrate layer of polypropylene (melting point about 165°C, density 0.90, melt index 14 and layer thickness 40 micrometres) and a heat-sealing layer of low pressure polyethylene (melting point about 130°C, density 0.96, melt index 40 and layer thickness 15 micrometres) is laminated to a shirt fabric made of 100% woven cotton with a weight of 150 g/sq.m under the following conditions:

| | |
|---|---|
| sealing pressure | 300 kPa |
| sealing temperature | 145°C |
| sealing time | 18 seconds |

The product exhibits high resistance to delamination and stability in all directions. This reinforcement material can be used as a collar liner, cuff liner, jacket liner and front strapping liner. The same material may also be used as a replacement for the build-up collar patch material as is used in conventional top fused European shirt construction.

Example 2

A co-extruded bilayer net of a substrate material polypropylene (melting point about 165°C, density 0.90, melt index 14 and layer thickness of 50 micrometres) and a heat sealing layer of terpolyamide material (nylon 6—6.6—12) melting point about 120°C and a layer thickness of 15 micrometers is laminated to garment materials where reinforcement and stabilization is required as in for example chest fronts, lapels, etc.

| | |
|---|---|
| sealing pressure | 300 kPa |
| sealing temperature | 125°—135°C |
| sealing time | 12 seconds |

Example 3

Same as Example 2 substituting a suitable polyester material for the terpolyamide material.

Example 4

A co-extruded tri-layer net A—B—A where the substrate material is polypropylene, melting point about 165°C, density 0.90 and the heat sealing layers are top and bottom is medium density polyethylene, melt index 36, said heat sealing layers being 10 micrometres thick, said product for use in automatic shirt neck banding collar making machines.

Example 5

A composite two-layer net (40 g/sq.m) having layers formed by co-extrusion consisting of substrate layer (32 g/sq.m) of polypropylene (Solvay HW 609, melting temperature approx. 167°C, density 0.90, melt flow index 18) and a heat sealing layer (8 g/sq.m) of linear low density polyethylene (reference MW 1210, melting temperature approx. 125°C, density 0.94, melt flow index 20) was laminated to a worsted woollen fabric (680 g/sq.m) in a fusion press (ref M 8 Reliant Tooling Company Limited) under the following conditions:

| | |
|---|---|
| sealing pressure | 4.2 Kgf/cm$^2$ |
| sealing temperature | 135°C to 140°C |
| sealing time | 10 secs |

The net used in this example had a first set of parallel strands (150 micrometers thick, 6 per cm) in the machine direction of the net and a second set of parallel strands (50 micrometres thick, 16 per cm) in a transverse direction which intersected at 90° to give rectangular openings.

The reinforced woollen fabric of this example had good drape and handle was found to be highly suitable for overcoats.

Example 6

A composite two layer net (20 g/sq.m) having layers formed by lamination consisting of a substrate layer (14 g/sq.m) of polypropylene (Solvay HW 609, melting temperature approx. 167°C, density 0.90, melt flow index 18) and a heat sealing layer (6 g/sq.m) of high density polyethylene (Solvay A3180 melting temperature approx. 135°C, density 0.96 melt flow index 18) was laminated to woven polyester shirting fabric (210 g/sq.m) in a fusion press in the same manner as Example 5 using a temperature of 140°C to 145°C.

The net used in this example was 100 to 150 micrometres thick and had two sets of similar parallel strands (6 per cm) which intersect at 90° to give square openings.

The reinforced polyester fabric of this example had good drape and handle was found to be highly suitable for shirt cuffs.

Example 7

A composite two layer net (20 g/sq.m) having layers formed by coextrusion consisting of a substrate layer (13 g/sq.m) of polypropylene (Profax 6524, melting temperature approx. 167°C, density 0.90 melt flow index 4) and a heat sealing layer (7 g/sq.m) of linear low density polyethylene (ref. MW 1210, melting temperature approx. 125°C, density 0.94 melt flow index 20) was laminated to a woven suiting fabric (20% polyester, 80% wool, weight approx. 410 g/sq.m) in a fusion press in the same manner as Example 5.

The net used in this example was 100—150 micrometres thick and had two sets of similar parallel strands (4 per cm) which intersect at 90° to give square openings.

The reinforced polyester/wool fabric of this example had good drape and handle and was found to be highly suitable for the fore-parts of jackets.

**Claims**

1. A method of reinforcing a textile top fabric (8) by applying to a surface of the top fabric (8) a heat fusible interlining comprising a thermoplastic polymeric resin net (10) and fusing the net (10) to the surface of the top fabric (8) under heat and pressure characterised in that the heat fusible interlining is a multi-layered composite net (10) comprising a heat sealing layer (14) of polymeric resin and a substrate layer (12) of different polymeric resin which has a melting temperature higher than that of the heat sealing layer (14) said method being carried out at a temperature such that the heat sealing layer (14) melts but the substrate layer (12) does not melt.

2. A method as claimed in claim 1 in which the net (10) comprises coextruded polymer layers.

3. A method as claimed in either claims 1 or 2 in which the net (10) consists essentially of a substrate layer (12) and a heat sealing layer (14).

4. A method as claimed in any of claims 1 to 3 in which the substrate layer (12) has a melting temperature of more than 80°C and the heat sealing layer (14) has a melting temperature of less than 150°C.

5. A method as claimed in any of claims 1 to 4 in which the substrate layer (12) has a melting temperature of 150°C to 250°C and the heat sealing layer (14) has a melting temperature of 110°C to 135°C.

6. A method as claimed in any of claims 1 to 5 in which the substrate layer (12) comprises polypropylene and the heat sealing layer (14) comprises polyethylene.

7. A method as claimed in any of claims 1 to 6 in which the heat sealing layer (14) comprises a linear low density polyethylene.

8. A method as claimed in any of claims 1 to 7 in which the net (10) has a weight per unit area of 10 to 40 g/sq.m.

9. A method as claimed in any of claims 1 to 8 in which the heat sealing layer (14) comprises 25% to 40% by weight of the net.

10. A method as claimed in any of claims 1 to 9 in which the net (10) has a regular pattern of intersecting strands and openings and comprises a first set of parallel strands which intersect with a second set of parallel strands to give 3 to 8 per cm intersections per strand in the direction of both sets of strands.

11. A method as claimed in any of claims 1 to 10 in which the heat sealing layer (14) has a colour which is different from that of the substrate layer (12) to aid identification of the heat sealing layer (14).

12. A reinforced textile top fabric (8) which has a heat fusible interlining comprising a thermoplastic polymeric resin net (10) heat sealed to the surface of the fabric (8) characterised in that the heat fusible interlining is a multi-layered composite net (10) comprising a heat sealing layer (14) of polymeric resin and a substrate layer (12) of a different polymeric resin which has a melting temperature higher than that of the heat sealing layer (14) said net (10) having been heat sealed to the surface of the fabric (8) at a temperature at which the heat sealing layer (14) melts but the substrate layer (12) does not melt.

**Patentansprüche**

1. Verfahren zur Versteifung von Oberstoffen (8) durch Aufbringen einer en Netz (10) aus einem thermoplastischen Polymerharz umfassenden wärmeschmelzbaren Zwischenschicht und Schmelzen des Netzes (10) unter Wärme und Druck auf die Oberfläche des Oberstoffes (8), dadurch gekennzeichnet, daß die wärmeschmelzbare Zwischenschicht ein Netz (10) aus einem Vielschicht-Verbundstoff ist, das eine Warmklebeschicht (14) aus Polymerharz und eine Substratschicht (12) aus einem anderen Polymerharz umfaßt, dessen Schmelztemperatur höher ist als die der Warmklebeschicht (14), wobei das Verfahren bei einer Temperatur ausgeführt wird, bei der die Warmklebeschicht (14), nicht aber die Substratschicht (12) schmilzt.

2. Verfahren nach Anspruch 1, bei dem das Netz (10) koextrudierte Polymerschichten umfaßt.

3. Verfahren nach Anspruch 1 oder 2, bei dem das Netz (10) im wesentlichen aus einer Substratschicht (12) und einer Warmklebeschicht (14) besteht.

4. Verfahren nach einem der Ansprüche 1 bis 3, bei dem die Substratschicht (12) eine Schmelztemperatur von mehr als 80°C und die Warmklebeschicht (14) eine Schmelztemperatur von weniger als 150°C aufweist.

5. Verfahren nach einem der Ansprüche 1 bis 4, bei dem die Substratschicht (12) eine Schmelztemperatur von 150—250°C und die Warmklebeschicht (14) eine Schmelztemperatur von 110—135°C aufweist.

6. Verfahren nach einem der Ansprüche 1 bis 5, bei dem die Substratschicht (12) Polypropylen und die Warmklebeschicht (14) Polyethylen umfaßt.

7. Verfahren nach einem der Ansprüche 1 bis 6, bei dem die Warmklebeschicht (14) ein lineares Polyethylen geringer Dichte umfaßt.

8. Verfahren nach einem der Ansprüche 1 bis 7, bei dem das Next (10) ein Gewicht von 10—40 g/m² aufweist.

9. Verfahren nach einem der Ansprüche 1 bis 8, bei dem die Warmklebeschicht (14) 25—40 Gew.-% des Netzes umfaßt.

10. Verfahren nach einem der Ansprüche 1 bis 9, bei dem das Netz (10) ein reguläres Muster sich schneidender Fäden mit Öffnungen aufweist und einen ersten Satz von parallelen Fäden umfaßt, der einen zweiten Satz von parallel Fäden so schneidet, daß 3—8 Schnittstellen/cm pro Faden in Richtung beider Sätze von Fäden erhalten werden.

11. Verfahren nach einem der Ansprüche 1 bis 10, bei dem die Warmklebeschicht (14) eine andere Farbe hat als die Substratschicht (12), um die Identifikation der Warmklebeschicht (14) zu unterstützen.

12. Versteifter Oberstoff (8) mit einer wärmeschmelzbaren Zwischenschicht, die ein Netz (10) aus einem thermoplastischen Polymerharz umfaßt, das mit der Oberfläche des Stoffes (8) wärmeversiegelt ist, dadurch gekennzeichnet, daß die wärmeschmelzbare Zwischenschicht ein Netz (10) aus einem Vielschicht-Verbundstoff ist, das eine Warmklebeschicht (14) aus Polymerharz und eine Substratschicht (12) aus einem anderen Polymerharz umfaßt, das einen Schmelzpunkt aufweist, der höher ist als der der Warmklebeschicht (14), wobei das Netz (10) mit der Oberfläche des Stoffes (8) bei einer Temperatur verklebt worden ist, bei der die Warmklebeschicht (14), nicht aber die Substratschicht (12) schmilzt.

**Revendications**

1. Procédé de renforcement d'une étoffe supérieure (8) ou d'endroit, par application, à une surface de l'étoffe supérieure (8), d'une doublure intermédiaire fusible à chaud comprenant un filet en résine de polymère thermoplastique et liaison par fusion du filet (10) à la surface de l'étoffe supérieure (8) à chaud et sous pression, caractérisé en ce que la doublure intermédiare fusible à chaud est un filet composite (10) à couches multiples comprenant une couche (14) de liaison à chaud en résine de polymère et une couche (12) de substrat en résine de polymère différente qui a une température de fusion plus élevée que celle de la couche (14) de liaison à chaud, ledit procédé étant mis en oeuvre à une température telle que la couche (14) de liaison à chaud fond mais que la couche (12) de substrat ne fond pas.

2. Procédé suivant la revendication 1, dans lequel le filet (10) comprend des couches de polymères coextrudées.

3. Procédé suivant la revendication 1 ou de la revendication 2, dans lequel le filet (10) comprend essentiellement une couche de substrat (12) et une couche de liaison à chaud (14).

4. Procédé suivant l'une quelconque des revendications 1 à 3, dans lequel la couche de substrate (12) a une température de fusion supérieure à 80°C et la couche de liaison à chaud (14) a une température de fusion inférieure à 150°C.

5. Procédé suivant l'une quelconque des revendications 1 à 4, dans lequel la couche de substrat (12) a une température de fusion de 150°C à 250°C et la couche de liaison à chaud (14) a une température de fusion de 110°C à 135°C.

6. Procédé suivant l'une quelconque des revendications 1 à 5, dans lequel la couche de substrat (12) est en polypropylène et la couche de liaison à chaud (14) est en polyéthylène.

7. Procédé suivant l'une quelconque des revendications 1 à 6, dans lequel la couche de liaison à chaud (14)- est en polyéthylène linéaire basse densité.

8. Procédé suivant l'une quelconque des revendications 1 à 7, dans lequel le filet (10) a une masse par unité de surface de 10 à 40 g/m².

9. Procédé suivant l'une quelconque des revendications 1 à 8, dans lequel la couche de liaison à chaud (14) représente 25% à 40% en poids du filet.

10. Procédé suivant l'une quelconque des revendications 1 à 9, dans lequel le filet (10) présente une configuration régulière de brins sécants et d'ouvertures et comprend un premier groupe de brins parallèles qui se croisent avec un deuxième groupe de brins parallèles pour donner 3 à 8 intersections par cm et par brin dans la direction des deux groupes de brins.

11. Procédé suivant l'une quelconque des revendications 1 à 10, dans lequel la couche de liaison à chaud (14) est d'une couleur différente de celle de la couche de substrat (12) pour aider à l'identification de la couche de liaison à chaud (14).

12. Etoffe supérieure ou d'endroit (8) renforcée, qui comporte une doublure intermédiaire fusible à chaud comprenant un filet (10) en résine de polymère thermoplastique lié à chaud à la surface de l'étoffe (8), caractérisée en ce que la doublure intermédiaire fusible à chaud est un filet composite (10) à couches multiples comprenant une couche (14) de liaison à chaud en ésine de polymère et une couche de substrat (12) en résine de polymère différente qui a une température de fusion supérieure à celle de la couche (14) de liaison à chaud, ledit filet (10) ayant été lié à chaud à la surface de l'étoffe (8) à une température à laquelle la couche (14) de liaison à chaud fond mais la couche (12) de substrat ne fond pas.

Fig.1

Fig.2

Fig.3